# EUROPEAN PATENT APPLICATION

(11) **EP 3 508 846 A1**
(43) Date of publication of application: **10.07.2019**
(21) Application number: 16915090.1
(22) Date of filing: 31.08.2016
(51) Int. Cl.: G01N 30/26, G01N 30/24

(54) **CONTROL DEVICE FOR LIQUID CHROMATOGRAPHY ANALYZER, CONTROL METHOD FOR LIQUID CHROMATOGRAPHY ANALYZER, AND LIQUID CHROMATOGRAPHY ANALYSIS SYSTEM**

(71) Applicant: Shimadzu Corporation, Kyoto-shi, Kyoto 604-8511 (JP)
(72) Inventor: OHASHI, Hiroshi, Kyoto-shi Kyoto 604-8511 (JP); TERADA, Hidetoshi, Kyoto-shi Kyoto 604-8511 (JP)
(74) Representative: Müller-Boré & Partner Patentanwälte PartG mbB
(86) International application number: PCT/JP2016/075398
(87) International publication number: WO 2018/042529

(57) **Abstract**

A controlling apparatus 2 for a liquid chromatograph 1 includes: a storage unit 200 configured to store a pH table T of information as to a mixed solution made of a plurality of solutions, the information including a relationship between a pH value of the mixed solution and types of the solutions to be mixed, concentrations of the solutions and a mixing ratio of the solutions; a display controlling section 211 configured to display some items of the information contained in the pH table T on a display device; and a specified composition condition receiving section 212 configured to receive a composition condition for a mixed solution to be used as a mobile phase in a liquid-chromatographic analysis specified by an operator.

## Description

### TECHNICAL FIELD

The present invention relates to method scouting (i.e. a procedure for finding the optimum analytical condition for a sample by analyzing the sample under various conditions) in liquid chromatography.

### BACKGROUND ART

Liquid chromatography is an analytical method in which a sample is injected into a liquid mobile phase and the mobile phase carrying the sample is pressurized by a pump or the like to be passed through a column. In the column, the components of the sample are separated from each other due to the differences in interactions (e.g. adsorption, partition, ion exchange, or size exclusion) between the stationary phase, the mobile phase and the sample carried by the mobile phase. The separated components are then detected.

To perform a liquid-chromatographic analysis, setting an analytical condition is necessary. Specifically, an analytical condition is set by determining the values of various analytical parameters (e.g. the quantity of a sample to be injected, the type of a mobile phase, the type of a column, the flow rate of a pump, and the temperature of a column oven for heating the column). Different analytical conditions yield different analytical results. For example, a certain combination of a sample and a mobile phase may adversely affect the separation of the components of the sample. The optimum analytical condition differs depending on the type of a sample to be analyzed. Therefore, before actually analyzing a sample, the sample should be analyzed under various conditions to find the optimum analytical condition for the sample (this procedure is called method scouting).

In method scouting, the operator inputs a plurality of analytical conditions into a liquid chromatograph (or the liquid chromatograph automatically sets a plurality of analytical conditions), the liquid chromatograph analyzes a sample under the different analytical conditions input (or set) in advance, and the operator compares the analytical results obtained through the analyses to select the optimum analytical condition for the sample (see Patent Literature 1, for example).

### CITATION LIST

### PATENT LITERATURE

Patent Literature 1: JP 2015-17924 A

### SUMMARY OF INVENTION

### TECHNICAL PROBLEM

The hydrogen ion exponent (pH) of a mobile phase is one of the analytical parameters used in a liquid-chromatographic analysis. For some samples, a small difference in the pH value of the mobile phase significantly affects the retention time. For these samples, method scouting is used to precisely determine the optimum pH value for the mobile phase of each sample. In method scouting, a sample is analyzed while changing the pH value of the mobile phase at close intervals to precisely determine the optimum pH value for the mobile phase of the sample.

The pH value of a mobile phase is determined by the composition condition of the mobile phase (specifically, the types of solutions to be mixed (more specifically, the types of the solutes), the concentrations of the solutions and the mixing ratio of the solutions).

The pH value is not necessarily in a simple linear relationship with the concentrations or mixing ratio of the solutions to be mixed. Even if a plurality of composition conditions are determined based on different mixing ratios at regular intervals, the mixed solutions based on the composition conditions will not necessarily have different pH values at regular intervals. The relationship of the pH value with the concentrations and mixing ratio of the solutions to be mixed varies depending on the types of the solutions to be mixed. Thus, for a certain combination of solutions, the composition condition for a mixed solution that gives a desired pH value cannot be set simply based on the composition condition set for another combination of solutions.

Therefore, to find different composition conditions for mobile phases that give different pH values in method scouting, the concentrations and mixing ratios of the combinations of solutions that give the desired pH values should be determined one by one through calculations or in experiments. This procedure takes a lot of time and efforts.

An object of the present invention is to provide a technique for facilitating the setting of the composition conditions for mobile phases that give various pH values in liquid-chromatographic analyses.

### SOLUTION TO PROBLEM

To solve the above problem, a controlling apparatus for a liquid chromatograph according to a first aspect of the present invention includes:
a storage unit configured to store a table of information as to a mixed solution made of a plurality of solutions, the information including a relationship between a pH value of the mixed solution and types of the solutions to be mixed, concentrations of the solutions and a mixing ratio of the solutions;
a display controlling unit configured to display some items of the information contained in the table on a display device; and
a specified composition condition receiving unit configured to receive a composition condition for a mixed solution to be used as a mobile phase in a liquid-chromatographic analysis specified by an operator.

A controlling apparatus for a liquid chromatograph according to a second aspect includes:
a storage unit configured to store a table of information as to a mixed solution made of a plurality of solutions, the information including a relationship between a pH value of the mixed solution and types of the solutions to be mixed, concentrations of the solutions and a mixing ratio of the solutions;
a specified pH receiving unit configured to receive a pH value specified for a mixed solution to be used as a mobile phase in a liquid-chromatographic analysis specified by an operator; and
a composition condition determining unit configured to determine, with reference to the table, a composition condition for the mixed solution that gives the pH value received at the specified pH receiving unit.

In the controlling apparatus according to the first or second aspect, the storage unit stores the table of information as to a mixed solution made of a plurality of solutions. The information includes a relationship between a pH value of the mixed solution and types of the solutions to be mixed, concentrations of the solutions and a mixing ratio of the solutions.

In the first aspect, the display device displays some items of the information contained in the table. The operator can select a desired pH value among the pH values in the table to easily and quickly specify the composition condition for a mixed solution that gives the desired pH value (specifically, the types of the solutions (more specifically, the types of the solutes), the concentrations of the solutions and the mixing ratio of the solutions).

In the second aspect, the composition condition determining unit automatically determines, with reference to the table, the composition condition for a mixed solution that gives the pH value specified by the operator. In other words, once the operator specifies a desired pH, the composition condition for a mixed solution that gives the specified pH is automatically determined.

In the controlling apparatus according to the first or second aspect, the table enables easy and quick specification (or determination) of the composition conditions for mobile phases that give various pH values. This facilitates the setting of the composition conditions.

In the controlling apparatus for a liquid chromatograph according to the first or second aspect,
the liquid chromatograph should preferably include:
a group of first containers each containing a first solution having a concentration different from each other;
a group of second containers each containing a second solution having a concentration different from each other;
a pump configured to pump a solution from a container; and
a mixer configured to mix a plurality of solutions pumped by the pump,
and the controlling apparatus should preferably further include:
   a mixed solution preparation controlling unit configured to prepare a mixed solution having the specified or determined composition condition by selecting a container or containers from the group of first containers and selecting a container or containers from the group of second containers, operating the pump to pump solutions from the selected containers, and operating the mixer to mix the pumped solutions.

In this structure of the chromatograph, a plurality of solutions having different concentrations are prepared and the controlling apparatus selects appropriate solutions from them to make a mixed solution for a mobile phase. This enables easy and quick preparation of mixed solutions having various pH values.

Another object of the present invention is to provide a method for controlling a liquid chromatograph. A method for controlling a liquid chromatograph according to a first aspect includes:
storing a table of information as to a mixed solution made of a plurality of solutions in a storage unit, the information including a relationship between a pH value of the mixed solution and types of the solutions to be mixed, concentrations of the solutions and a mixing ratio of the solutions;
displaying some items of the information contained in the table on a display device; and
receiving a composition condition for a mixed solution to be used as a mobile phase in a liquid-chromatographic analysis specified by an operator.

A method for controlling a liquid chromatograph according to a second aspect includes:
storing a table of information as to a mixed solution made of a plurality of solutions in a storage unit, the information including a relationship between a pH value of the mixed solution and types of the solutions to be mixed, concentrations of the solutions and a mixing ratio of the solutions;
receiving a pH value for a mixed solution to be used as a mobile phase in a liquid-chromatographic analysis specified by an operator; and
determining, with reference to the table, a composition condition for the mixed solution that gives the pH value received at the step for receiving the pH value.

In the method for controlling a liquid chromatograph according to the first or second aspect,
the liquid chromatograph should preferably include:
a group of first containers each containing a first solution having a concentration different from each other;
a group of second containers each containing a second solution having a concentration different from each other;
a pump configured to pump a solution from a container; and
a mixer configured to mix a plurality of solutions pumped by the pump,
and the method should preferably further include:
   preparing a mixed solution having the specified or determined composition condition by selecting a container or containers from the group of first containers and selecting a container or containers from the group of second containers, operating the pump to pump solutions from the selected containers, and operating the mixer to mix the pumped solutions.

Yet another object of the present invention is to provide a liquid-chromatographic analyzing system. A liquid-chromatographic analyzing system according to a first aspect includes:
a liquid chromatograph, and
a controlling apparatus for the liquid chromatograph.

The liquid chromatograph includes:
a group of first containers each containing a first solution having a concentration different from each other;
a group of second containers each containing a second solution having a concentration different from each other;
a pump configured to pump a solution from a container; and
a mixer configured to mix a plurality of solutions pumped by the pump,
and the controlling apparatus includes:
   a storage unit configured to store a table of information as to a mixed solution made of the first and second solutions, the information including a relationship between a pH value of the mixed solution and concentrations of the solutions to be mixed and a mixing ratio of the solutions;
   a display controlling unit configured to operate a display device to display some items of the information contained in the table;
   a specified composition condition receiving unit configured to receive a composition condition for a mixed solution to be used as a mobile phase in a liquid-chromatographic analysis specified by an operator; and
   a mixed solution preparation controlling unit configured to prepare a mixed solution having the specified composition condition by selecting a container or containers from the group of first containers and selecting a container or containers from the group of second containers, operating the pump to pump solutions from the selected containers, and operating the mixer to mix the pumped solutions.

A liquid-chromatographic analyzing system according to a second aspect includes:
a liquid chromatograph, and
a controlling apparatus for the liquid chromatograph.

The liquid chromatograph includes:
a group of first containers each containing a first solution having a concentration different from each other;
a group of second containers each containing a second solution having a concentration different from each other;
a pump configured to pump a solution from a container; and
a mixer configured to mix a plurality of solutions pumped by the pump,
and the controlling apparatus includes:
   a storage unit configured to store a table of information as to a mixed solution made of the first and second solutions, the information including a relationship between a pH value of the mixed solution and concentrations of the solutions to be mixed and a mixing ratio of the solutions;
   a specified pH receiving unit configured to receive a pH value for a mixed solution to be used as a mobile phase in a liquid-chromatographic analysis specified by an operator;
   a composition condition determining unit configured to determine, with reference to the table, a composition condition for the mixed solution that gives the pH value received at the specified pH receiving unit; and
   a mixed solution preparation controlling unit configured to prepare a mixed solution having the determined composition condition by selecting a container or containers from the group of first containers and selecting a container or containers from the group of second containers, operating the pump to pump solutions from the selected containers, and operating the mixer to mix the pumped solutions.

In the chromatographic analyzing system according to the first or second aspect, the storage unit stores the table of information as to a mixed solution made of the first and second solutions. The information includes a relationship between a pH value of the mixed solution and concentrations of the solutions to be mixed and mixing ratios of the solutions. The table enables easy and quick specification (or determination) of the composition conditions for mobile phases that give various pH values. This facilitates the setting of the composition conditions.

In the chromatographic analyzing system according to the first or second aspect, a plurality of solutions having different concentrations are prepared in the chromatograph, and the controlling apparatus selects appropriate solutions from them to prepare a mixed solution for a mobile phase. This enables easy and quick preparation of mixed solutions having various pH values.

### ADVANTAGEOUS EFFECTS OF INVENTION

According to the present invention, the storage unit stores the table of information as to a mixed solution made of a plurality of solutions. The information includes a relationship between a pH value of the mixed solution and types of the solutions to be mixed, concentrations of the solutions and a mixing ratio of the solutions. The table enables easy and quick identification of the composition conditions for mobile phases that gives various pH values. This facilitates the setting of the composition conditions.

### BRIEF DESCRIPTION OF DRAWINGS

Fig. 1 is a schematic diagram of a liquid-chromatographic analyzing system according to a first embodiment.
Figs. 2A and 2B show examples of pH tables.
Fig. 3 shows an example of a display window.
Fig. 4 shows an example of a display window with a pH table.
Fig. 5 is a schematic diagram of a liquid-chromatographic analyzing system according to a second embodiment.
Fig. 6 shows an example of a display window.

### DESCRIPTION OF EMBODIMENTS

Embodiments of the present invention will now be described.

### <A. First Embodiment>

### <1. Structure of Apparatus>

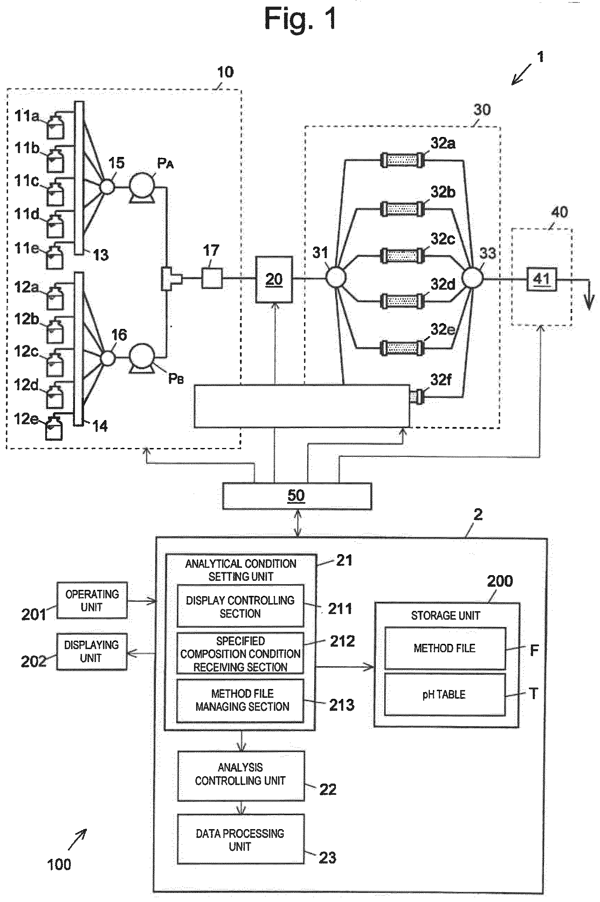

A liquid-chromatographic analyzing system 100 according to a first embodiment of the present invention will now be described with reference to Fig. 1. Fig. 1 is a schematic diagram of the liquid-chromatographic analyzing system 100.

The liquid-chromatographic analyzing system 100 includes a liquid chromatograph 1 and a controlling apparatus 2.

### <Liquid chromatograph 1>

The liquid chromatograph 1 includes a liquid transferring unit 10 configured to prepare a mixed solution to be used as a mobile phase. The liquid supplying unit 10 includes a group of first containers 11a to 11e each containing a first solution (hereinafter referred to as first containers), and a group of second containers 12a to 12e each containing a second solution different from the first solution (hereinafter referred to as second containers). The first solution in the first containers 11a to 11e have a concentration different from each other. The second solution in the second containers 12a to 12e have a concentration different from each other.

The first containers 11a to 11e are in connection with a gradient mixer (mixer) 17 via a deaerator 13, a switching valve 15, and a pump P_{A}. The second containers 12a to 12e are in connection with the gradient mixer 17 via a deaerator 14, a switching valve 16, and a pump P_{B}.

In this structure, the pump P_{A} pumps a solution or solutions from a container or containers selected from the first containers 11a to 11e to the gradient mixer 17, the pump P_{B} pumps a solution or solutions from a container or containers selected from the second containers 12a to 12e to the gradient mixer 17, and the gradient mixer 17 mixes the solutions to prepare a mixed solution. This mixed solution is used as a mobile phase in a liquid-chromatographic analysis.

As described later, the individual elements of the liquid supplying unit 10 are in electrical connection with the controlling apparatus 2 so that the liquid supplying unit 10 prepares a mixed solution having a composition condition specified in a method file F under the control of the controlling apparatus 2.

The liquid chromatograph 1 further includes an auto-sampler 20, a column oven 30, a detecting unit 40, and a system controller 50 configured to control the elements 10, 20, 30, and 40 of the liquid chromatograph 1. The auto-sampler 20 injects a sample into the mobile phase prepared in the liquid supplying unit 10. The column oven 30 includes a plurality of columns 32a to 32f and heats these columns. The column oven 30 includes passage switches 31 and 33. The passage switches 31 and 33 switch passages for the mobile phase to flow the mobile phase carrying the sample through a column selected from the columns 32a to 32f. The detecting unit 40 includes a detector 41 having a photodiode array (PDA) or the like and detects the components of the sample.

### <Controlling Apparatus 2>

The controlling apparatus 2, which is in electrical connection with the liquid chromatograph 1, manages analytical procedures via the system controller 50, and analyzes and processes data from the detecting unit 40. The controlling apparatus 2 is embodied by a personal computer as hardware. In the personal computer, specially-designed controlling and processing software is installed and executed to embody the functional blocks 21, 22, and 23. The controlling apparatus 2 is provided with an operating unit 201 including a keyboard and a mouse, and a displaying unit 202 including a display.

The controlling apparatus 2 includes an analytical condition setting unit 21, an analysis controlling unit 22, and a data processing unit 23 as functional blocks.

The analytical condition setting unit 21 is a functional block configured to set an analytical condition for a liquid-chromatographic analysis (e.g. a plurality of analytical conditions to be determined through method scouting). The analytical condition setting unit 21 includes a display controlling section 211 configured to display various display windows related to the setting of an analytical condition on the displaying unit 202, a specified composition condition receiving section 212 configured to receive a composition condition specified for a mixed solution to be used as a mobile phase, and a method file managing section 213 configured to manage the method file F (described later).

The analysis controlling unit 22 controls the above elements 10, 20, 30, and 40 via the system controller 50 to perform a liquid-chromatographic analysis under the analytical condition set by the analytical condition setting unit 21.

The data processing unit 23 analyzes and processes the measurement data obtained through the liquid-chromatographic analysis performed under the control of the analysis controlling unit 22.

The controlling apparatus 2 includes a storage unit 200. The storage unit 200 stores the method file F and a pH table T.

The "method file F" is a file for writing analytical conditions. In this file, one record corresponds to one analytical condition, and each record has the values of various items (e.g. the type of a sample, the quantity of the sample to be injected, the composition condition of a mobile phase, the temperature of the column oven 30, the type of the columns).

The pH table T lists information as to a mixed solution made of a plurality of solutions. The information includes a relationship between a pH value of the mixed solution and types of the solutions to be mixed, concentrations of the solutions and a mixing ratio of the solutions. The pH table T is generated based on experiments or calculations.

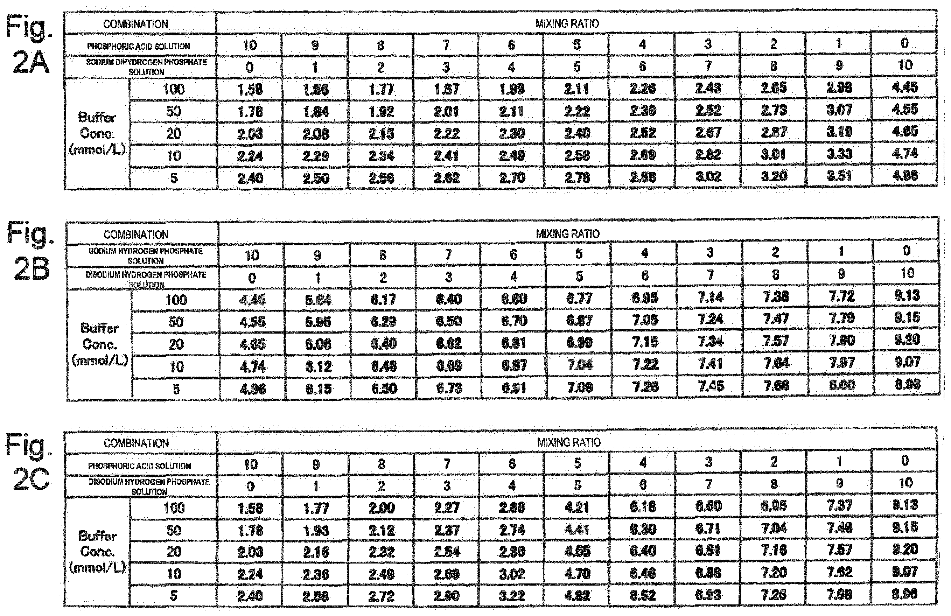

For example, the pH table T in Fig. 2A shows relationships between the pH values of mixed solutions and the concentrations of solutions to be mixed and the mixing ratios of the solutions. The mixed solutions are made by mixing each of the phosphoric acid solutions having concentrations of 5 mmol/L, 10 mmol/L, 20 mmol/L, 50 mmol/L, and 100 mmol/L with each of the sodium dihydrogen phosphate solutions having the same concentrations as those of the phosphoric acid solutions at various mixing ratios.

For example, it is found from the pH table T that the mixed solution with a pH value of "2.58" is made by mixing a phosphoric acid solution of 10 mmol/L with a sodium dihydrogen phosphate solution of 10 mmol/L at a mixing ratio of 5:5.

For example, the pH table T in Fig. 2B shows relationships between the pH values of mixed solutions and the concentrations of solutions to be mixed and the mixing ratios of the solutions. The mixed solutions are made by mixing each of the sodium hydrogen phosphate solutions having concentrations of 5 mmol/L, 10 mmol/L, 20 mmol/L, 50 mmol/L, and 100 mmol/L with each of the disodium hydrogen phosphate solutions having the same concentrations as those of the sodium hydrogen phosphate solutions at various mixing ratios.

For example, the pH table T in Fig. 2C shows relationships between the pH values of mixed solutions and the concentrations of solutions to be mixed and the mixing ratios of the solutions. The mixed solutions are made by mixing each of the phosphoric acid solutions having concentrations of 5 mmol/L, 10 mmol/L, 20 mmol/L, 50 mmol/L, and 100 mmol/L with each of the disodium hydrogen phosphate solutions having the same concentrations as those of the phosphoric acid solutions at various mixing ratios.

The storage unit 200 stores at least one pH table T. The storage unit 200, however, stores at least the pH table T related to the types of solutions to be stored in the liquid supplying unit 10 (i.e. the pH table T listing the pH values of mixed solutions made by mixing solutions from the first containers 11a to 11e (the first solution having a concentration different from each other) with solutions from the second containers 12a to 12e (the second solution having a concentration different from each other) at various mixing ratios).

### <2. Setting Analytical Condition>

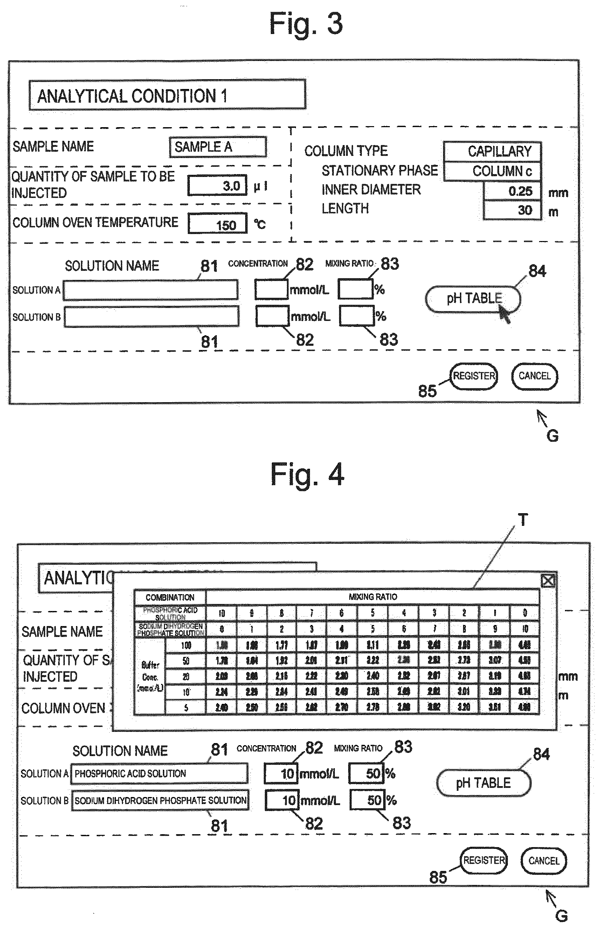

The process for setting an analytical condition by the analytical condition setting unit 21 will now be described with reference to Figs. 3 and 4. Figs. 3 and 4 show an example of display windows on the displaying unit 202.

When the operator inputs instructions to start setting an analytical condition with the operating unit 201, the display controlling section 211 displays a receiving window G on the displaying unit 202. The receiving window G is configured to receive various inputs as to the setting of an analytical condition from the operator.

The receiving window G has input areas for various items (specifically, an input area for the name of a sample to be analyzed, an input area for the quantity of the sample to be injected, an input area for the temperature of the column oven 30, an input area for the type of the columns to be used, input areas for a composition condition for a mixed solution to be used as a mobile phase, etc.). There are many items, thus, Figs. 3 and 4 show only part of them. The operator inputs information such as desired values in the input areas to set an analytical condition.

In this embodiment, the operator inputs a composition condition for a mixed solution to be used as a mobile phase (specifically, the types of solutions to be mixed, the concentrations of the solutions and the mixing ratio of the solutions) as one of the items in the receiving window G. The receiving window G thus has input areas 81 for the types of solutions to be mixed, input areas 82 for the concentrations of the solutions and input areas 83 for the mixing ratio of the solutions. The operator inputs information such as desired values in the input areas 81, 82, and 83 to set a composition condition for a mixed solution to be used as a mobile phase. The operator may directly input information in the input areas 81, 82, and 83 or select one of the choices shown in a list in the form of a pull-down menu, for example.

The receiving window G further has an icon (pH table displaying icon) 84 configured to receive instructions to display the pH table T on the display. When inputting a composition condition for a mixed solution to be used as a mobile phase, the operator can click the pH table displaying icon 84 so that the display controlling section 211 displays the pH table T stored in the storage unit 200 in the form of a sub-window on the displaying unit 202, for example (see Fig. 4).

When the storage unit 200 stores a plurality of pH tables T, the display controlling section 211 displays a list of combinations of solutions in the pH tables T in the form of a pull-down menu on the displaying unit 202 so that the operator can select one of the combinations in the list. After the selection by the operator, the display controlling section 211 displays the pH table T having the selected combination on the displaying unit 202. Alternatively, the display controlling section 211 may select the pH table T related to the types of solutions stored in the liquid supplying unit 10 and displays the selected pH table T on the displaying unit 202. Alternatively, when the input areas 81 have information as to a combination of solutions, the display controlling section 211 may select the pH table T having the combination of solutions and displays the selected pH table T on the displaying unit 202. Alternatively, the display controlling section 211 displays all the pH tables T stored in the storage unit 200 on the displaying unit 202.

The operator can select a desired pH value among the pH values in the pH table T on the display to quickly find the composition condition for a mixed solution that gives the desired pH value (specifically, the types of solutions to be mixed, the concentrations of the solutions and the mixing ratio of the solutions). When the operator wants to have a mixed solution with a pH value of 2.58, for example, the operator can quickly find from the pH table T in Fig. 2A that the mixed solution can be made by mixing a phosphoric acid solution of 10 mmol/L and a sodium dihydrogen phosphate solution of 10 mmol/L at a mixing ratio of 5:5.

When the operator inputs necessary information in the input areas 81, 82, and 83 with reference to the pH table T, the specified composition condition receiving section 212 receives the specified composition condition. In other words, the specified composition condition receiving section 212 receives the composition condition for a mixed solution to be used as a mobile phase in a liquid-chromatographic analysis specified by the operator.

After the operator has finished inputting or selecting all the items and given instruction for the registration of the analytical condition (specifically, the operator gives instruction for the registration of the analytical condition by clicking a registration icon 85 in the receiving window G, for example), the method file managing section 213 generates a new record in the method file F and registers the received analytical condition in the record. Setting one analytical condition is completed in this way. The operator can continue to set another analytical condition if necessary.

### <3. Performing Analysis>

The liquid chromatograph 1 performs a liquid-chromatographic analysis based on an analytical condition registered in the method file F. Specifically, the operator selects one of the analytical conditions registered in the method file F and gives instructions to start a liquid-chromatographic analysis under the selected analytical condition. On receipt of the instructions, the analysis controlling unit 22 controls the elements 10, 20, 30, and 40 of the liquid chromatograph 1 to perform a liquid-chromatographic analysis under the selected analytical condition. The process for performing a liquid-chromatographic analysis under the control of the analysis controlling unit 22 will now be described with reference to Fig. 1.

The analysis controlling unit 22 selects the containers containing the solutions specified in the analytical condition from the first containers 11a to 11e and the second containers 12a to 12e, and operates the pumps P_{A} and P_{B} to pump solutions from the selected containers. At this time, the analysis controlling unit 22 controls the quantities of the solutions to be pumped to meet the mixing ratio of the solutions specified in the analytical condition. The gradient mixer 17 then mixes the pumped solutions to prepare a mixed solution as specified in the analytical condition. This mixed solution is used as a mobile phase.

The mobile phase prepared in the liquid supplying unit 10 flows into the auto-sampler 20. The analysis controlling unit 22 controls the auto-sampler 20 to inject the sample specified in the analytical condition in the quantity specified in the analytical condition into the mobile phase. The mobile phase carrying the sample then flows into the column oven 30 having the temperature specified in the analytical condition. By this time, the analysis controlling unit 22 has operated the passage switches 31 and 33 in the column oven 30 to make a passage for leading the mobile phase into the column specified in the analytical condition. The mobile phase carrying the sample thus flows into the specified column. While the sample carried by the mobile phase is passing through the column, the components of the sample are temporally separated. The detecting unit 40 detects the separated components one by one and obtains the measurement data. The detecting unit 40 then sends the measurement data to the controlling apparatus 2. In the controlling apparatus 2, the measurement data is stored in the storage unit 200 and analyzed and processed in the data processing unit 23.

### <B. Second Embodiment>

### <1. Structure of Apparatus>

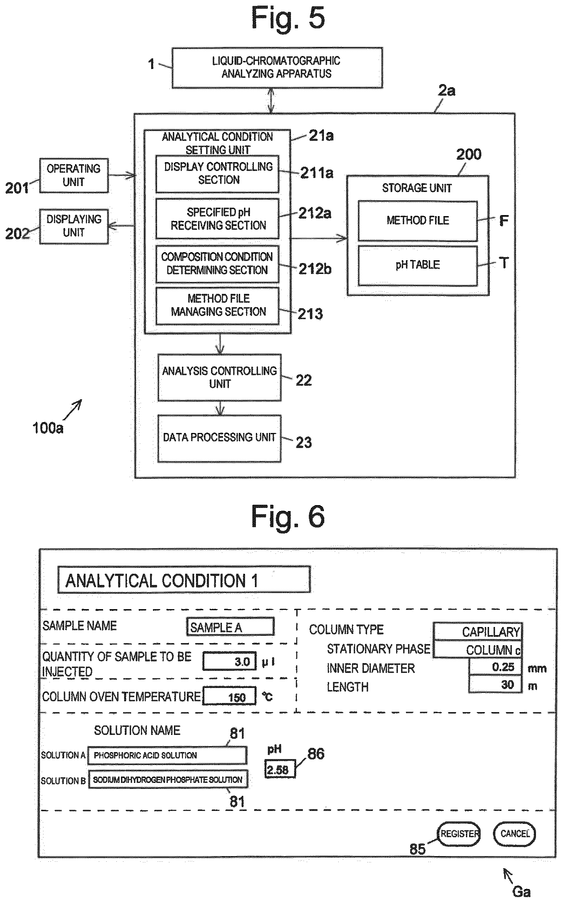

A liquid-chromatographic analyzing system 100a according to a second embodiment of the present invention will now be described with reference to Fig. 5. Fig. 5 is a schematic diagram of the liquid-chromatographic analyzing system 100a. In the description below, the elements equal to the elements described above are provided with the same reference signs and the description of these elements are omitted.

The liquid-chromatographic analyzing system 100a includes the liquid chromatograph 1 and a controlling apparatus 2a in electrical connection with the liquid chromatograph 1.

The structure of the liquid chromatograph 1 is as described above. The hardware structure of the controlling apparatus 2a is similar to that of the controlling apparatus 2 described above. In the controlling apparatus 2a embodied by a personal computer, specially-designed controlling and processing software is installed and executed to embody the functional blocks 21a, 22, and 23. As in the controlling apparatus 2, the controlling apparatus 2a is provided with the operating unit 201 and the displaying unit 202.

The controlling apparatus 2a includes an analytical condition setting unit 21a, the analysis controlling unit 22, and the data processing unit 23 as functional blocks.

The analytical condition setting unit 21a is a functional block configured to set an analytical condition for a liquid-chromatographic analysis (e.g. a plurality of analytical conditions to be determined through method scouting). The analytical condition setting unit 21a includes a display controlling section 211a configured to display various display windows related to the setting of an analytical condition on the displaying unit 202, a specified pH receiving section 212a configured to receive a pH value specified for a mixed solution to be used as a mobile phase, a composition condition determining section 212b configured to determine a composition condition for the mixed solution, and the method file managing section 213 configured to manage the method file F.

The functions of the analysis controlling unit 22 and the data processing unit 23 are as described above.

The controlling apparatus 2a includes the storage unit 200 as in the controlling apparatus 2. This storage unit 200 also stores the method file F and at least one pH table T.

### <2. Setting Analytical Condition>

The process for setting an analytical condition by the analytical condition setting unit 21a will now be described with reference to Fig. 6. Fig. 6 shows an example of a display window on the displaying unit 202.

When the operator inputs instructions to start setting an analytical condition with the operating unit 201, the display controlling section 211a displays a receiving window Ga configured to receive various inputs as to the setting of an analytical condition from the operator on the displaying unit 202.

The layout of the receiving window Ga is similar to that of the receiving window G described above. The receiving window Ga, however, has a pH input area 86 for a pH value for a mixed solution to be used as a mobile phase instead of the input areas 82 and 83 (the input areas 82 for the concentrations of solutions to be mixed and the input areas 83 for the mixing ratio of the solutions) and the pH table displaying icon 84 in the receiving window G described above. In this embodiment, the operator does not have to input the concentrations of solutions to be mixed and the mixing ratio of the solutions.

The operator may select one of the choices (e.g. pH values in the pH table T) shown in a list in the form of a pull-down menu in the pH input area 86, for example, or directly input information in the pH input area 86.

When the operator selects a desired pH value in the pH input area 86 (or inputs a desired pH value in the pH input area 86), the specified pH receiving section 212a receives the pH value specified through selection (or input). In other words, the specified pH receiving section 212a receives the pH value for a mixed solution to be used as a mobile phase in a liquid-chromatographic analysis specified by the operator.

After the specified pH receiving section 212a has received the specified pH value, the composition condition determining section 212b determines the composition condition for a mixed solution that gives the specified pH value (specifically, the concentrations of the solutions and the mixing ratio of the solutions) with reference to the pH table T stored in the storage unit 200 (or the pH table T having the combination of solutions input in the input areas 81 or the pH table T related to the types of the solutions stored in the liquid supplying unit 10, for example, when the storage unit 200 stores a plurality of pH tables T).

In the structure where the operator can directly input a desired pH value in the pH input area 86, if the operator inputs a pH value not contained in the pH table T, the composition condition determining section 212b calculates the composition condition for a mixed solution that gives the desired pH value through interpolation (e.g. linear interpolation) based on the values in the pH table T, for example.

After the composition condition determining section 212b has determined the composition condition for a mixed solution and the operator has finished inputting or selecting other items than the pH value and given instructions for the registration of the analytical condition, the method file managing section 213 generates a new record in the method file F and registers the analytical condition input by the operator and the composition condition for a mixed solution determined with reference to the pH table T in the record. Setting one analytical condition is completed in this way. The operator can continue to set another analytical condition if necessary.

### <C. Other Embodiments>

In the above embodiments, the first containers 11a to 11e each contain a solution having a concentration different from each other, however, this is not always the case. Alternatively, one of the first containers 11a to 11e may contain water. In this case, a certain quantity of a solution and a certain quantity of water may be pumped from their containers and mixed to make a solution having a desired concentration. In this case, the first containers may consist of two containers: one contains a solution having a relatively high concentration and the other contains water. The same is true for the second containers 12a to 12e.

### REFERENCE SIGNS LIST

- 1...: Liquid chromatograph
- 10...: Liquid Supplying Unit
- 11a to 11e...: First Containers
- 12a to 12e...: Second Containers
- 13, 14...: Deaerator
- 15, 16...: Switching Valve
- 17...: Gradient Mixer
- 20...: Auto-sampler
- 30...: Column Oven
- 31, 33...: Passage Switch
- 32a to 32f...: Column
- 40...: Detecting Unit
- 41...: Detector
- 50...: System Controller
- 2, 2a...: Controlling Apparatus
- 21, 21a...: Analytical Condition Setting Unit
- 211, 211a...: Display Controlling Section
- 212...: Specified Composition Condition Receiving Section
- 212a...: Specified pH Receiving Section
- 212b...: Composition Condition Determining Section
- 213...: Method File Managing Section
- 22...: Analysis Controlling Unit
- 23...: Data Processing Unit
- 201...: Operating Unit
- 202...: Displaying Unit
- T... pH: Table
- F...: Method File
- G, Ga...: Receiving Window
- 84... pH: Table Displaying Icon
- 86... pH: Input Area
- 100, 100a...: Liquid-chromatographic Analyzing System

## Claims

1. A controlling apparatus for a liquid chromatograph, comprising:
a storage unit configured to store a table of information as to a mixed solution made of a plurality of solutions, the information including a relationship between a pH value of the mixed solution and types of the solutions to be mixed, concentrations of the solutions and a mixing ratio of the solutions;
a display controlling unit configured to display some items of the information contained in the table on a display device; and
a specified composition condition receiving unit configured to receive a composition condition for a mixed solution to be used as a mobile phase in a liquid-chromatographic analysis specified by an operator.

2. A controlling apparatus for a liquid chromatograph, comprising:
a storage unit configured to store a table of information as to a mixed solution made of a plurality of solutions, the information including a relationship between a pH value of the mixed solution and types of the solutions to be mixed, concentrations of the solutions and a mixing ratio of the solutions;
a specified pH receiving unit configured to receive a pH value specified for a mixed solution to be used as a mobile phase in a liquid-chromatographic analysis specified by an operator; and
a composition condition determining unit configured to determine, with reference to the table, a composition condition for the mixed solution that gives the pH value received at the specified pH receiving unit.

3. The controlling apparatus for a liquid chromatograph according to claim 1 or 2,
wherein the liquid chromatograph comprises:
a group of first containers each containing a first solution having a concentration different from each other;
a group of second containers each containing a second solution having a concentration different from each other;
a pump configured to pump a solution from a container; and
a mixer configured to mix a plurality of solutions pumped by the pump,
and the controlling apparatus further comprises :
a mixed solution preparation controlling unit configured to prepare a mixed solution having the specified or determined composition condition by selecting a container or containers from the group of first containers and selecting a container or containers from the group of second containers, operating the pump to pump solutions from the selected containers, and operating the mixer to mix the pumped solutions.

4. A method for controlling a liquid chromatograph, comprising:
storing a table of information as to a mixed solution made of a plurality of solutions in a storage unit, the information including a relationship between a pH value of the mixed solution and types of the solutions to be mixed, concentrations of the solutions and a mixing ratio of the solutions;
displaying some items of the information contained in the table on a display device; and
receiving a composition condition for a mixed solution to be used as a mobile phase in a liquid-chromatographic analysis specified by an operator.

5. A method for controlling a liquid chromatograph, comprising:
storing a table of information as to a mixed solution made of a plurality of solutions in a storage unit, the information including a relationship between a pH value of the mixed solution and types of the solutions to be mixed, concentrations of the solutions and a mixing ratio of the solutions;
receiving a pH value for a mixed solution to be used as a mobile phase in a liquid-chromatographic analysis specified by an operator; and
determining, with reference to the table, a composition condition for the mixed solution that gives the pH value received in receiving the pH value specified.

6. The method for controlling a liquid chromatograph according to claim 4 or 5, wherein the liquid chromatograph includes:
a group of first containers each containing a first solution having a concentration different from each other;
a group of second containers each containing a second solution having a concentration different from each other;
a pump configured to pump a solution from a container; and
a mixer configured to mix a plurality of solutions pumped by the pump,
and the method further comprises:
preparing a mixed solution having the specified or determined composition condition by selecting a container or containers from the group of first containers and selecting a container or containers from the group of second containers, operating the pump to pump solutions from the selected containers, and operating the mixer to mix the pumped solutions.

7. A liquid-chromatographic analyzing system, comprising:
a liquid chromatograph, and
a controlling apparatus for the liquid chromatograph,
wherein the liquid chromatograph, comprises:
a group of first containers each containing a first solution having a concentration different from each other;
a group of second containers each containing a second solution having a concentration different from each other;
a pump configured to pump a solution from a container; and
a mixer configured to mix a plurality of solutions pumped by the pump,
and the controlling apparatus includes:
a storage unit configured to store a table of information as to a mixed solution made of the first and second solutions, the information including a relationship between a pH value of the mixed solution and concentrations of the solutions to be mixed and a mixing ratio of the solutions;
a display controlling unit configured to operate a display device to display some items of the information contained in the table;
a specified composition condition receiving unit configured to receive a composition condition for a mixed solution to be used as a mobile phase in a liquid-chromatographic analysis specified by an operator; and
a mixed solution preparation controlling unit configured to prepare a mixed solution having the specified composition condition by selecting a container or containers from the group of first containers and selecting a container or containers from the group of second containers, operating the pump to pump solutions from the selected containers, and operating the mixer to mix the pumped solutions.

8. A liquid-chromatographic analyzing system, comprising:
a liquid chromatograph, and
a controlling apparatus for the liquid chromatograph,
wherein the liquid chromatograph includes:
a group of first containers each containing a first solution having a concentration different from each other;
a group of second containers each containing a second solution having a concentration different from each other;
a pump configured to pump a solution from a container; and
a mixer configured to mix a plurality of solutions pumped by the pump,
and the controlling apparatus includes:
a storage unit configured to store a table of information as to a mixed solution made of the first and second solutions, the information including a relationship between a pH value of the mixed solution and concentrations of the solutions to be mixed and a mixing ratio of the solutions;
a specified pH receiving unit configured to receive a pH value for a mixed solution to be used as a mobile phase in a liquid-chromatographic analysis specified by an operator;
a composition condition determining unit configured to determine, with reference to the table, a composition condition for the mixed solution that gives the pH value received at the specified pH receiving unit; and
a mixed solution preparation controlling unit configured to prepare a mixed solution having the determined composition condition by selecting a container or containers from the group of first containers and selecting a container or containers from the group of second containers, operating the pump to pump solutions from the selected containers, and operating the mixer to mix the pumped solutions.
